# FASCICULE DE BREVET EUROPEEN

(11) **EP 3 365 933 B1**
(45) Date de publication et mention de la délivrance du brevet: **06.11.2019**
(21) Numéro de dépôt: 16782290.7
(22) Date de dépôt: 19.10.2016
(51) Int. Cl.: H01M 4/04, H01M 4/139, H01M 4/36, H01M 10/0525, H01M 10/058, H01M 4/58

(54) **PROCEDE DE FABRICATION D'UN ACCUMULATEUR DU TYPE LITHIUM-ION**
VERFAHREN ZUR HERSTELLUNG EINES LITHIUM-IONEN-AKKUMULATORS
METHOD OF MANUFACTURING AN ACCUMULATOR OF THE LITHIUM-ION TYPE

(30) Priorité: 21.10.2015 FR 1560050
(43) Date de publication de la demande: 29.08.2018
(73) Titulaire: Renault S.A.S., 92100 Boulogne-Billancourt (FR)
(72) Inventeur: REYNIER, Yvan, 38120 Saint-Egreve (FR); CHAKIR, Mohamed, 91180 Saint-Germain-les-Arpajon (FR); DELOBEL, Bruno, 92130 ISSY-LES-MOULINEAUX (FR); MASSE, Florence, 38100 Grenoble (FR)
(74) Mandataire: Brevalex
(86) Numéro de dépôt international: PCT/EP2016/075114
(87) Numéro de publication internationale: WO 2017/067996

(56) Documents cités:
- EP-A1- 2 775 555
- WO-A1-2011/157958
- FR-A1- 3 001 339
- US-A1- 2014 329 151
- SHANMUKARAJ D ET AL: "Sacrificial salts: Compensating the initial charge irreversibility in lithium batteries", ELECTROCHEMISTRY COMMUNICATIONS, ELSEVIER, AMSTERDAM, NL, vol. 12, no. 10, 1 octobre 2010 (2010-10-01), pages 1344-1347, XP027423660, ISSN: 1388-2481, DOI: 10.1016/J.ELECOM.2010.07.016 [extrait le 2010-10-01]

## Description

### DOMAINE TECHNIQUE

La présente invention a trait à un procédé de fabrication d'un accumulateur du type lithium-ion

Les accumulateurs de ce type ont pour vocation d'être utilisés comme source d'énergie autonome, en particulier, dans les équipements électroniques portables (tels que les téléphones mobiles, les ordinateurs portables, l'outillage), afin de remplacer progressivement les accumulateurs nickel-cadmium (NiCd) et nickel-hydrure métallique (NiMH). Ils peuvent également servir à fournir l'alimentation en énergie nécessaire aux nouvelles microapplications, telles que les cartes à puce, les capteurs ou autres systèmes électromécaniques.

Du point de vue de leur fonctionnement, les accumulateurs de type lithium-ion fonctionnent selon le principe d'insertion-désinsertion de l'ion lithium selon les modalités suivantes.

Lors de la décharge de l'accumulateur, le lithium désinséré de l'électrode négative sous forme ionique Li⁺ migre à travers l'électrolyte conducteur ionique et vient s'intercaler dans le réseau cristallin du matériau actif de l'électrode positive. Le passage de chaque ion Li⁺ dans le circuit interne de l'accumulateur est exactement compensé par le passage d'un électron dans le circuit externe, générant ainsi un courant électrique.

En revanche, lors de la charge de l'accumulateur, les réactions se produisant au sein de l'accumulateur sont les réactions inverses de la décharge, à savoir que :
- l'électrode négative va insérer du lithium dans le réseau du matériau d'insertion la constituant ;
- l'électrode positive va libérer du lithium, lequel va s'intercaler dans le matériau d'insertion de l'électrode négative.

Lors du premier cycle de charge de l'accumulateur, quand le matériau actif de l'électrode négative est porté à un potentiel d'insertion du lithium, une partie du lithium va réagir avec l'électrolyte à la surface des grains de matériau actif de l'électrode négative pour former une couche de passivation à sa surface. La formation de cette couche de passivation consomme une quantité d'ions lithium non négligeable, ce qui se matérialise par une perte irréversible de capacité de l'accumulateur (cette perte étant qualifiée de capacité irréversible et pouvant être évaluée de l'ordre de 5 à 20% de la capacité initiale de l'électrode positive), du fait que les ions lithium ayant réagi ne sont plus disponibles pour les cycles ultérieurs de charge/décharge.

Il convient donc de minimiser, au maximum, cette perte lors de la première charge, afin que la densité d'énergie de l'accumulateur soit la plus élevée possible.

Pour ce faire, il a été proposé, dans l'art antérieur, deux types de techniques pour pallier l'inconvénient susmentionné :
- des techniques de prélithiation de l'électrode négative ; ou
- des techniques de surlithiation de l'électrode positive.

Concernant les techniques de prélithiation de l'électrode négative, on peut citer :
- les techniques dites « *in situ* » consistant à déposer sur l'électrode négative du lithium métallique (c'est-à-dire au degré d'oxydation « 0 ») soit sous forme d'une feuille métallique (comme décrit dans WO 1997031401) ou soit sous forme d'une poudre de lithium métallique stabilisée par une couche protectrice (comme décrit dans Electrochemistry Communications 13 (2011) 664-667) mélangée avec l'encre comprenant les ingrédients de l'électrode négative (à savoir, le matériau actif, les conducteurs électroniques et un liant organique), l'insertion de lithium se faisant, indépendamment de l'alternative retenue, de manière spontanée par un phénomène de corrosion ;
- les techniques dites « *ex situ* » consistant à prélithier électrochimiquement l'électrode négative, en plaçant celle-ci dans un montage comportant un bain électrolytique et une contre-électrode comprenant du lithium, ces techniques permettent de contrôler la quantité de lithium introduite dans l'électrode négative mais présentent toutefois l'inconvénient de nécessiter la mise en place d'un montage expérimental lourd.

En variante, il a été également proposé, dans l'art antérieur, des techniques de surlithiation de l'électrode positive, notamment, en ajoutant dans la composition comprenant les ingrédients constitutifs de l'électrode positive, un sel sacrificiel qui, lors de la première charge, va se décomposer et fournir la quantité nécessaire de Li pour former la couche de passivation à la surface de l'électrode négative.

Dans ces techniques, il est à noter que le sel sacrificiel doit pouvoir se décomposer à un potentiel situé dans la fenêtre de potentiel que balaie l'électrode positive lors de la première charge.

Aussi, lorsque la première charge a lieu, deux réactions électrochimiques simultanées génèrent des ions Li⁺, qui sont la désinsertion de lithium de l'électrode positive et la décomposition du sel sacrificiel. Lors de la décomposition du sel sacrificiel, il se forme notamment des sous-produits gazeux, qui seront évacués à l'issue de l'étape de charge. En effet, on évite ainsi d'alourdir inutilement l'accumulateur par ces sous-produits, qui, en outre, pourraient gêner le fonctionnement électrochimique ultérieur de la cellule.

Ces techniques sont notamment décrites dans le document FR 2 961 634, ou le document WO201157958, qui précisent que le sel sacrificiel est introduit directement dans l'encre comprenant les ingrédients de l'électrode positive, à savoir le matériau actif, le conducteur électronique, le liant organique, l'encre étant ensuite déposée sur un substrat collecteur de courant pour former l'électrode positive, moyennant quoi le sel sacrificiel se trouve réparti, de manière aléatoire, dans l'électrode positive.

Lors de la charge, le sel sacrificiel se décompose pour former, notamment, des gaz, la décomposition étant à l'origine de la création d'une porosité au sein de l'électrode positive, une variation de quelques pourcentages de la porosité pouvant engendrer une augmentation significative de la résistance interne, ce qui est préjudiciable pour la durée de vie de l'élément. Aussi, sachant que la porosité minimum d'une électrode est bornée par la contrainte mécanique qu'elle est à même de supporter lors de sa fabrication (notamment, lors d'une étape de calandrage), il est possible de se retrouver, après la première charge engendrant la décomposition du sel, dans des gammes de porosité défavorables au fonctionnement de l'accumulateur.

Par exemple, pour une électrode positive comprenant, comme matériau actif, du LiFePO₄, et 5% massique d'oxalate de lithium et présentant une porosité de 35%, après cyclage à 5 V face à une électrode négative comprenant, comme matériau actif, un composite silicium/graphite, il s'ensuit une augmentation de la résistance, qui présente une valeur équivalente à celle d'une électrode présentant une porosité de 42%. Ceci s'explique par l'élimination en gaz des 5% initiaux d'oxalate de lithium, qui occupent un volume de 7% de l'électrode du fait de la densité de 2,2 g/cm³ pour le sel contre 3,2 g/cm³ pour l'électrode en moyenne.

En résumé, ces techniques présentent un certain nombre d'inconvénients, car la décomposition du sel sacrificiel peut engendrer plusieurs phénomènes :
- l'apparition de volumes morts au cœur de l'électrode, en raison de la décomposition du sel, ce qui contribue à l'augmentation de la porosité de l'électrode ; et
- la déconnexion électronique de certaines parties de l'électrode rendant le matériau actif inutilisable et induisant, ainsi, une perte de capacité de l'accumulateur.

Aussi, au vu de ce qui précède, les auteurs de la présente invention se sont fixé pour objectif de mettre au point un procédé de fabrication d'un accumulateur de type lithium-ion permettant de surmonter les inconvénients susmentionnés et permettant, en particulier, d'augmenter la capacité de l'accumulateur lithium-ion et donc sa densité d'énergie et également la cyclabilité de l'accumulateur.

### EXPOSE DE L'INVENTION

Ainsi, l'invention a trait à un procédé de préparation d'un accumulateur lithium-ion comprenant une électrode positive et une électrode négative disposées de part et d'autre d'un électrolyte, ladite électrode positive comprenant, comme matériau actif, un matériau à base de lithium, ledit procédé comprenant les étapes suivantes :
a) une étape de dépôt à la surface de l'électrode positive, avant placement dans l'accumulateur, d'un sel de lithium ;
b) une étape d'assemblage de l'électrode positive, de l'électrode négative et de l'électrolyte ; et
c) une étape de formation d'une couche de passivation à la surface de l'électrode négative avec les ions lithium issus de la décomposition du sel de lithium par application d'une première charge à l'assemblage susmentionné.

En d'autres termes, la première charge est appliquée dans des conditions de potentiel nécessaires pour la décomposition du sel de lithium, cette décomposition se traduisant par une libération d'ions lithium, qui vont contribuer à la formation de la couche de passivation à la surface de l'électrode négative. Du fait que le sel de lithium fournit les ions lithium nécessaires à la formation de la couche de passivation, on peut ainsi qualifier ce sel de « sel sacrificiel ».

Aussi, les ions lithium nécessaires pour la formation de la couche de passivation ne sont pas issus du matériau actif de l'électrode positive. Les ions lithium du matériau actif de l'électrode positive ne sont donc pas perdus pour la formation de cette couche lors de la première charge et donc la perte de capacité de l'accumulateur s'en trouve amoindrie voire nulle.

Enfin, le fait d'appliquer un sel de lithium à la surface de l'électrode positive contrairement à l'art antérieur, où le sel de lithium est ajouté à la composition précurseur de l'électrode positive, remplit un certain nombre d'avantages.

En effet, d'une part, à l'issue de la première charge, la couche comprenant le sel de lithium s'est complètement décomposée pour donner les ions Li⁺ nécessaires à la formation de la couche de passivation sur l'électrode négative, sans que cela ne désorganise la structure interne de l'électrode positive, celle-ci, à l'issue de la première charge, présentant une organisation structurale similaire à celle d'une électrode classique, notamment sans qu'il n'y ait apparition de volume mort et de perte de matériau actif. Le sel de lithium se trouvant à la surface de l'électrode, il n'y a pas de modification de la porosité intrinsèque de l'électrode.

D'autre part, contrairement aux modes de réalisation de l'art antérieur, où le sel sacrificiel est introduit directement dans la composition précurseur de l'électrode positive et où il est nécessaire d'inclure une quantité de sel supérieure à celle nécessaire à la formation de la couche de passivation du fait de l'impossibilité de maîtriser le placement des grains de sel dans la structure de l'électrode, le procédé de l'invention donne la possibilité d'utiliser, du fait de la localisation du sel de lithium juste à la surface de l'électrode positive, uniquement la quantité suffisante à la formation de la couche de passivation sur l'électrode négative. Dans ce cas, il n'y a donc pas de sel excédentaire dans l'électrode positive après formation de la couche de passivation et donc de matière inutile dans celle-ci.

Comme mentionné ci-dessus, le procédé de l'invention comporte une étape de traitement de l'électrode positive, avant placement dans un assemblage comprenant l'électrode négative et l'électrolyte, ce traitement consistant à déposer sur l'électrode positive (avantageusement, au moins sur la face destinée à être en contact avec l'électrolyte) un sel de lithium, lequel est destiné à participer à la formation de la couche de passivation lors de la première charge de l'assemblage.

Cette étape de dépôt peut être effectuée, en particulier, par une technique de jet d'encre, consistant à projeter sur l'électrode positive, une composition comprenant le sel de lithium, ladite composition pouvant être projetée à partir d'une buse.

Cette étape de dépôt peut être réalisée également par enduction d'une composition comprenant le sel de lithium à la surface de l'électrode positive.

En particulier, l'étape de dépôt peut être effectuée avec une composition comprenant :
- le sel de lithium ;
- un additif carboné conducteur de l'électricité, tel que du noir de carbone ;
- un liant polymérique, tel qu'un liant à base d'un polymère fluoré comme le polyfluorure de vinylidène ; et
- un solvant organique, par exemple, un solvant polaire aprotique, comme un solvant N-méthyl-2-pyrrolidone (NMP).

Le sel de lithium présente avantageusement un anion oxydable avec un cation lithium.

A titre d'exemple de sel de lithium, on peut citer les sels appartenant aux catégories suivantes :
- les azotures de lithium de formules N₃A, avec A correspondant à un cation lithium ;
- les cétocarboxylates de lithium, tels que ceux répondant aux formules (II) à (IV) suivantes : 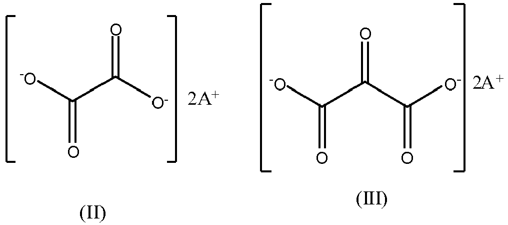 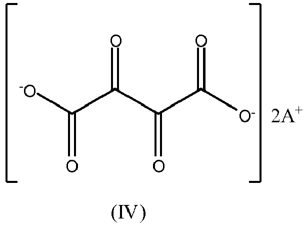 avec A correspondant à un cation lithium ;
- les hydrazides de lithium, tels que ceux répondant aux formules (V) et (VI) suivantes : 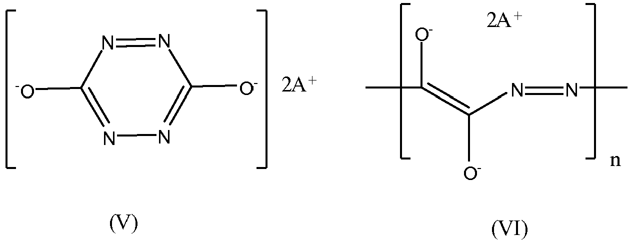 avec A correspondant à un cation lithium et n correspondant au nombre de répétition du motif pris entre crochets, ce nombre de répétition pouvant aller de 3 à 1000.

Avantageusement, il peut s'agir d'un sel de lithium de formule (II), qui correspond à l'oxalate de lithium.

L'électrode positive, sur laquelle est déposé le sel de lithium, comprend, comme matériau actif, un matériau à base de lithium, lequel matériau remplit la fonction de matériau d'insertion du lithium et ce, de manière réversible pour que les processus de charge et de décharge puissent avoir lieu lors du fonctionnement de l'accumulateur.

En effet, par électrode positive, on précise, classiquement, dans ce qui précède et ce qui suit, qu'il s'agit de l'électrode qui fait office de cathode, quand le générateur débite du courant (c'est-à-dire lorsqu'il est en processus de décharge) et qui fait office d'anode lorsque le générateur est en processus de charge.

Le matériau actif de l'électrode positive peut être un matériau du type oxyde lithié comprenant au moins un élément métallique de transition ou du type phosphate lithié comprenant au moins un élément métallique de transition.

Comme exemples de composés oxydes lithiés comprenant au moins un élément métallique de transition, on peut citer des oxydes simples ou des oxydes mixtes (c'est-à-dire des oxydes comprenant plusieurs éléments métalliques de transition distincts) comprenant au moins un élément métallique de transition, tels que des oxydes comprenant du nickel, du cobalt, du manganèse et/ou de l'aluminium (ces oxydes pouvant être des oxydes mixtes).

Plus spécifiquement, comme oxydes mixtes comprenant du nickel, du cobalt, du manganèse et/ou de l'aluminium, on peut citer les composés de formule (VII) suivante :

LiM²O₂ (VII)

dans laquelle M² est un élément choisi parmi Ni, Co, Mn, Al et les mélanges de ceux-ci.

A titre d'exemples de tels oxydes, on peut citer les oxydes lithiés LiCoO₂, LiNiO₂ et les oxydes mixtes Li(Ni,Co,Mn)O₂ (tel que Li (Ni_{1/3}Mn_{1/3}Co_{1/3})O₂) connu également sous la dénomination NMC), les oxydes dits riches en lithium Li₁₊ₓ(Ni,Co,Mn)O₂, Li(Ni,Co,Al)O₂ (tel que Li(Ni_{0,8}Co_{0,15}Al_{0,05})O₂ connu également sous la dénomination NCA) ou Li(Ni,Co,Mn,Al)O₂.

Comme exemples de composés phosphates lithiés comprenant au moins un élément métallique de transition, on peut citer les composés de formule LiM¹PO₄, où M¹ est choisi parmi Fe, Mn, Co et les mélanges de ceux-ci, tel que LiFePO₄.

Outre la présence d'un matériau actif, tel que ceux définis ci-dessus, l'électrode positive peut comprendre un liant polymérique, tel que du polyfluorure de vinylidène (PVDF), un mélange carboxyméthylcellulose avec un latex du type styrène et/ou butadiène ainsi que un ou plusieurs adjuvants conducteurs de l'électricité, qui peuvent être des matériaux carbonés comme du noir de carbone.

Ainsi, d'un point de vue structural, l'électrode positive peut se présenter sous forme d'un matériau composite comprenant une matrice en liant(s) polymérique(s), au sein de laquelle sont dispersées des charges constituées par le matériau actif et éventuellement le ou adjuvants conducteurs de l'électricité, ledit matériau composite pouvant être déposé sur un collecteur de courant.

Une fois l'électrode positive traitée par un sel de lithium, elle est assemblée avec une électrode négative et l'électrolyte de sorte à former la cellule électrochimique de l'accumulateur lithium-ion.

On précise que, par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

Classiquement, l'électrode négative comprend, comme matériau actif d'électrode, un matériau apte à insérer, de manière réversible, du lithium.

En particulier, le matériau actif d'électrode négative peut être :
- un matériau carboné, tel que du carbone dur (connu sous l'appellation anglo-saxonne « hard carbon »), du graphite naturel ou artificiel ;
- du lithium métallique ou un alliage de lithium, tel qu'un alliage silicium-lithium, un alliage étain-lithium) ; ou
- un oxyde mixte de lithium, tel que Li₄Ti₅O₁₂ ou LiTiO₂.

En outre, au même titre que pour l'électrode positive, notamment lorsqu'elle n'est pas en lithium métallique ou en alliage de lithium, l'électrode négative peut comprendre un liant polymérique, tel que du polyfluorure de vinylidène (PVDF), un mélange carboxyméthylcellulose avec un latex du type styrène et/ou butadiène ainsi que un ou plusieurs adjuvants conducteurs de l'électricité, qui peuvent être des matériaux carbonés, comme du noir de carbone. Qui plus est, au même titre que pour l'électrode positive, l'électrode négative peut se présenter, d'un point de vue structural, comme un matériau composite comprenant une matrice en liant(s) polymérique(s) au sein de laquelle sont dispersées des charges constituées par le matériau actif (se présentant, par exemple, sous forme particulaire) et éventuellement le ou les adjuvants conducteurs de l'électricité, ledit matériau composite pouvant être déposé sur un collecteur de courant.

L'électrolyte, disposé entre l'électrode positive et l'électrode négative, est quant à lui un électrolyte conducteur d'ions lithium, et peut être, en particulier :
- un électrolyte liquide comprenant un sel de lithium dissous dans au moins solvant organique, tel qu'un solvant apolaire aprotique ;
- un liquide ionique ; ou
- un électrolyte solide polymère.

A titre d'exemples de sel de lithium, on peut citer LiClO₄, LiAsF₆, LiPF₆, LiBF₄, LiRfSO₃, LiCH₃SO₃, LiN(RfSO₂)₂, Rf étant choisi parmi F ou un groupe perfluoroalkyle comportant de 1 à 8 atomes de carbone, du trifluorométhanesulfonylimidure de lithium (connu sous l'abréviation LiTfSI), du bis(oxalato)borate de lithium (connu sous l'abréviation LiBOB), du bis (perfluoréthylsulfonyl)imidure de lithium (également connu sous l'abréviation LiBETI), du fluoroalkylphosphate de lithium (connu sous l'abréviation LiFAP).

A titre d'exemples de solvants organiques susceptibles d'entrer dans la constitution de l'électrolyte susmentionné, on peut citer les solvants carbonates, tels que les solvants carbonates cycliques, les solvants carbonates linéaires et les mélanges de ceux-ci.

A titre d'exemples de solvants carbonates cycliques, on peut citer le carbonate d'éthylène (symbolisé par l'abréviation EC), le carbone de propylène (symbolisé par l'abréviation PC).

A titre d'exemples de solvants carbonates linéaires, on peut citer le carbonate de diméthyle, le carbonate de diéthyle (symbolisé par l'abréviation DEC), le carbonate de diméthyle (symbolisé par l'abréviation DMC), le carbonate d'éthylméthyle (symbolisé par l'abréviation EMC).

En outre, l'électrolyte peut être amené à imbiber un élément séparateur, par un élément séparateur polymérique poreux, disposé entre les deux électrodes de l'accumulateur.

L'assemblage ainsi obtenu est ensuite soumis, conformément à l'invention, à une étape de première charge dans des conditions de potentiel nécessaires pour la décomposition du sel de lithium déposé à la surface de l'électrode positive, la décomposition se matérialisant par la libération des ions lithium, lesquels vont participer à la formation de la couche de passivation.

Aussi, d'un point de vue pratique, il s'entend que le sel de lithium doit pouvoir se décomposer à une fenêtre de potentiels que va balayer l'électrode positive lors de la première charge.

Ainsi, lors de la mise en œuvre de la première charge, outre le fait que l'accumulateur se charge, il s'ensuit également une réaction de décomposition du sel de lithium. Lors de cette réaction, le sel de lithium produit, en outre, des ions lithium qui passent dans l'électrolyte et réagissent avec celui-ci pour former la couche de passivation au niveau des particules de matériau actif de l'électrode négative.

En plus de la libération d'ions lithium, la décomposition du sel entraîne la production d'une faible quantité de composés gazeux. Ceux-ci peuvent être solubles dans l'électrolyte et peuvent, si besoin est, être éliminés lors d'une étape de dégazage.

D'autres caractéristiques et avantages de l'invention apparaîtront du complément de description qui suit et qui se rapporte à des modes de réalisation particuliers.

Bien entendu, ce complément de description n'est donné qu'à titre d'illustration de l'invention et n'en constitue en aucun cas une limitation.

### BRÈVE DESCRIPTION DES DESSINS

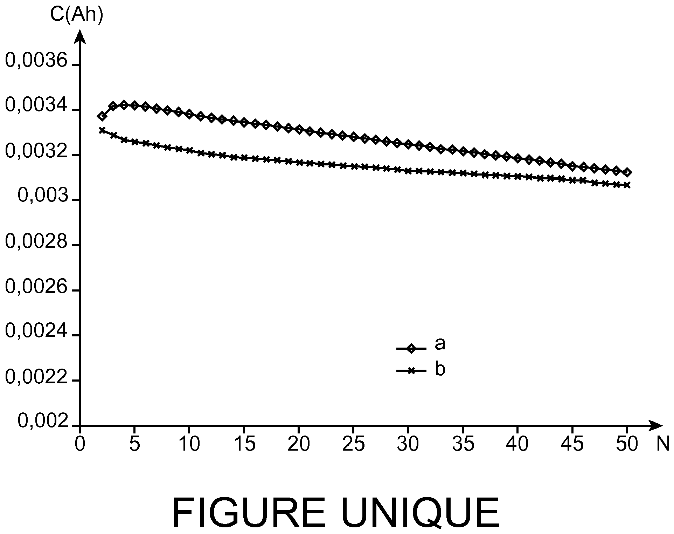

La figure 1 est une courbe illustrant l'évolution de la capacité de décharge C (en Ah) en fonction du nombre de cycles N pour le premier accumulateur et le deuxième accumulateur de l'exemple 2.

### EXPOSÉ DÉTAILLÉ DE MODES DE RÉALISATION PARTICULIERS

### EXEMPLE 1

Le présent exemple illustre la préparation d'un accumulateur lithium-ion conforme à l'invention (dit premier accumulateur), dont l'électrode positive est revêtue préalablement d'une couche comprenant un sel de lithium et d'un accumulateur non conforme à l'invention (dit deuxième accumulateur).

Pour ce premier accumulateur, l'électrode positive est obtenue, par enduction, sur un collecteur de courant en aluminium 1085 d'une épaisseur de 20 µm, d'une encre comprenant 90% massique de LiFePO₄, 5% massique d'un conducteur électronique du type noir de carbone (Super P TIMCAL) et 5% massique d'un liant polymérique du type polyfluorure de vinylidène (obtenu auprès du fournisseur Solvay) dispersé dans du NMP.

L'électrode enduite passe alors dans un four de séchage, qui permet l'évaporation du solvant. On obtient sur le collecteur une couche d'épaisseur 140 µm et 19 mg/cm².

L'électrode positive est alors traitée, en déposant sur la face destinée à être en contact avec l'électrolyte, une encre comprenant 87% massique d'oxalate de lithium (obtenu auprès du fournisseur Aldrich), 10% massique d'un conducteur électronique du type noir du carbone (Super P Timcal) et 3% massique d'un liant polymérique du type polyfluorure de vinylidène (solubilisé dans de la NMP), moyennant quoi 1,8 mg/cm² d'oxalate de lithium sont déposés, puis séchés pour évaporer le solvant.

Le produit est découpé sous forme de pastilles de diamètre 14 mm, lesquelles constituent ainsi des électrodes circulaires. Ces électrodes sont ensuite calandrées à l'aide d'une presse afin d'en diminuer la porosité et d'obtenir une porosité de l'ordre de 35%.

Une fois l'électrode positive ainsi traitée, elle est placée avec une électrode négative constituée de lithium métallique de part et d'autre d'un séparateur en polypropylène de 25 µm d'épaisseur (Celgard 2500) imbibé d'un électrolyte comprenant un mélange de solvants carbonates (carbonate d'éthylène/carbonate de diméthyle/carbonate d'éthyle et de méthyle en proportions volumiques 1 :1 :1) avec un sel de lithium LiPF₆ (1 mol/L), moyennant quoi il résulte une cellule électrochimique du type pile bouton CR2032.

Pour le deuxième accumulateur, celui-ci est préparé, de manière similaire, au premier accumulateur, si ce n'est que l'électrode positive ne subit pas de traitement de surface avec une encre comprenant l'oxalate de lithium.

Le premier accumulateur et le deuxième accumulateur sont soumis à une formation électrique à un régime C/10 correspondant à une charge en 10 heures.

A l'issue de la première charge jusqu'à 5 V, la capacité du premier accumulateur est estimée à 5,3 mAh, tandis que la capacité du deuxième accumulateur est estimée à 4,6 mAh, les 0,7 mAh d'écart pouvant être attribués à l'oxydation de l'oxalate de lithium de la couche déposée en surface de l'électrode, libérant des ions lithium supplémentaires.

### EXEMPLE 2

Le présent exemple illustre la préparation d'un accumulateur lithium-ion conforme à l'invention (dit premier accumulateur), dont l'électrode positive est revêtue préalablement d'une couche comprenant un sel de lithium et d'un accumulateur non conforme à l'invention (dit deuxième accumulateur).

La préparation des accumulateurs est similaire à celle présentée à l'exemple 1, si ce n'est que l'électrode négative, que ce soit pour le premier accumulateur ou pour le deuxième accumulateur, est une électrode comprenant, comme matériau actif, du graphite.

Cette électrode est enduite, de manière conventionnelle, par transfert à partir d'une encre comprenant 96% en masse de matière active (Timcal SLP30), 2% de carboxyméthylcellulose (Aldrich) et 2% de latex styrène butadiène (BASF) dispersé dans l'eau désionisée.

Le premier accumulateur et le deuxième accumulateur sont soumis à une formation électrique à un régime C/10 entre 2,5 et 5V, de sorte à mesurer la capacité à l'issue de la première charge et la capacité de décharge après cette première charge.

A l'issue de la première charge jusqu'à 5V, la capacité du premier accumulateur est estimée à 5,3 mAh, tandis que la capacité du deuxième accumulateur est estimée à 5 mAh tandis que la capacité déchargée est estimée à 3,9 mAh pour le premier accumulateur et à 3,6 mAh pour le deuxième accumulateur, ce qui correspond à un gain de 8% grâce à l'apport de la couche comprenant de l'oxalate de lithium.

Il est également réalisé un test consistant à soumettre le premier accumulateur et le deuxième accumulateur à un cyclage comportant 50 cycles de charge-décharge à un régime de C/2 entre 2 et 3,6 V à température ambiante.

A l'issue de chaque cycle, la capacité de décharge des accumulateurs (exprimée en Ah) est mesurée, les valeurs de capacité étant reportées sur la figure 1, illustrant l'évolution de la capacité de décharge C (en Ah) en fonction du nombre de cycles N, les résultats pour le premier accumulateur et le deuxième accumulateur étant respectivement illustrés par les courbes a)et b).

Il ressort, de la figure 1, que le premier accumulateur présente les meilleurs résultats. Ceci peut s'expliquer par le fait que, lors de la première charge, la couche de passivation est formée grâce aux ions lithium issus de la décomposition du sel de lithium ajoutée en surface de l'électrode et non aux ions lithium issus du matériau actif et/ou du cœur du matériau de l'électrode.

## Revendications

1. Procédé de préparation d'un accumulateur lithium-ion comprenant une électrode positive et une électrode négative disposées de part et d'autre d'un électrolyte, ladite électrode positive comprenant, comme matériau actif, un matériau à base de lithium, ledit procédé comprenant les étapes suivantes :
a) une étape de dépôt à la surface de l'électrode positive, avant placement dans l'accumulateur, d'un sel de lithium ;
b) une étape d'assemblage de l'électrode positive, de l'électrode négative et de l'électrolyte ; et
c) une étape de formation d'une couche de passivation à la surface de l'électrode négative avec les ions lithium issus de la décomposition du sel de lithium par application d'une première charge à l'assemblage susmentionné.

2. Procédé selon la revendication 1, dans lequel l'étape de dépôt est effectuée par une technique de jet d'encre, consistant à déposer sur l'électrode positive, une composition comprenant le sel de lithium.

3. Procédé selon la revendication 1 ou 2, dans lequel le sel de lithium est déposé par le biais d'une composition comprenant :
- le sel de lithium ;
- un additif carboné conducteur de l'électricité ;
- un liant polymérique ; et
- un solvant organique.

4. Procédé selon l'une quelconque des revendications précédentes, dans lequel le sel de lithium est choisi parmi :
- les azotures de lithium de formule N₃A, avec A correspondant à un cation lithium ;
- les cétocarboxylates de lithium, tels que ceux répondant aux formules (II) à (IV) suivantes : 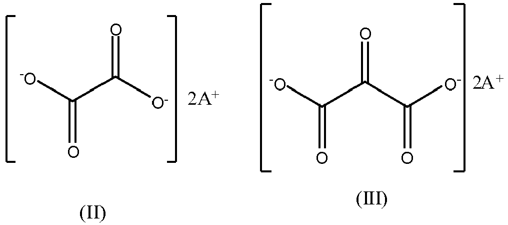 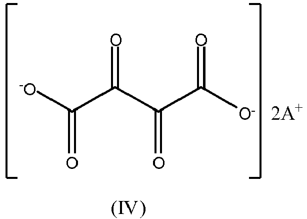 avec A correspondant à un cation lithium ;
- les hydrazides de lithium, tels que ceux répondant aux formules (V) et (VI) suivantes :
avec A correspondant à un cation lithium et n correspondant au nombre de répétition du motif pris entre crochets, ce nombre de répétition pouvant aller de 3 à 1000.

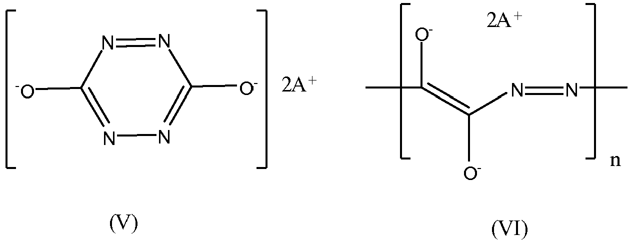

5. Procédé selon l'une quelconque des revendications précédentes, dans lequel le sel de lithium est le cétocarboxylate de lithium de formule (II), dit également oxalate de lithium.

6. Procédé selon l'une quelconque des revendications précédentes, dans lequel l'électrode positive comprend, comme matériau actif, un matériau du type oxyde lithié ou du type phosphate lithié comprenant au moins un élément métallique de transition.

7. Procédé selon l'une quelconque des revendications précédentes, dans lequel l'électrode positive comprend, comme matériau actif, du LiFePO₄.

8. Procédé selon l'une quelconque des revendications 1 à 7, dans lequel l'électrode négative comprend, comme matériau actif :
- un matériau carboné, tel que du carbone dur (connu sous l'appellation anglo-saxonne « hard carbon »), du graphite ;
- du lithium métallique ou un alliage de lithium, tel qu'un alliage silicium-lithium, un alliage étain-lithium) ; ou
- un oxyde mixte de lithium, tel que Li₄Ti₅O₁₂ ou LiTiO₂.

9. Procédé selon l'une quelconque des revendications précédentes, dans lequel l'électrode négative comprend, comme matériau actif, du graphite.

## Patentansprüche

1. Verfahren zur Herstellung eines Lithium-Ionen-Akkumulators, der eine positive Elektrode und eine negative Elektrode umfasst, die auf beiden Seiten eines Elektrolyten angeordnet sind, wobei die positive Elektrode als aktives Material ein Material auf Basis von Lithium umfasst, wobei das Verfahren die folgenden Schritte umfasst:
a) einen Schritt des Aufbringens eines Lithiumsalzes auf die Oberfläche der positiven Elektrode vor der Platzierung in dem Akkumulator;
b) einen Schritt des Zusammenbauens der positiven Elektrode, der negativen Elektrode und des Elektrolyten; und
c) einen Schritt des Bildens einer Passivierungsschicht auf der Oberfläche der negativen Elektrode mit den Lithiumionen, die aus der Zersetzung des Lithiumsalzes durch Aufbringen einer ersten Ladung auf den genannten Zusammenbau hervorgehen.

2. Verfahren nach Anspruch 1, bei dem der Schritt des Aufbringens durch eine Tintenstrahltechnik durchgeführt wird, umfassend ein Abscheiden einer Zusammensetzung, die das Lithiumsalz umfasst, auf der positiven Elektrode.

3. Verfahren nach Anspruch 1 oder 2, bei dem das Lithiumsalz mit Hilfe einer Zusammensetzung abgeschieden wird, die Folgendes umfasst:
- das Lithiumsalz;
- ein elektrisch leitendes Kohlenstoffadditiv;
- einen polymerischen Binder; und
- ein organisches Lösungsmittel.

4. Verfahren nach einem der vorhergehenden Ansprüche, bei dem das Lithiumsalz ausgewählt wird aus:
- den Lithiumaziden mit der Formel N₃A, wobei A einem Lithiumkation entspricht;
- den Lithiumcetocarboxylaten wie zum Beispiel jenen, die den folgenden Formeln (II) bis (IV) genügen: 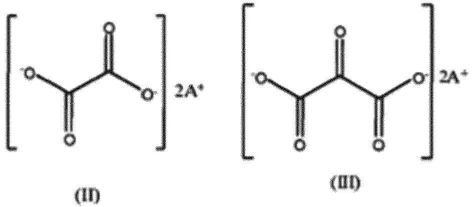 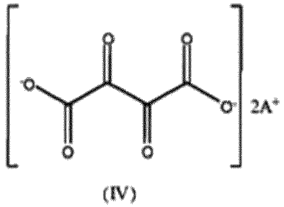 wobei A einem Lithiumkation entspricht;
- den Lithiumhydraziden wie zum Beispiel jenen, die den folgenden Formeln (V) und (VI) entsprechen:
wobei A einem Lithiumkation entspricht und n der Wiederholungszahl des Motivs entspricht, das zwischen eckige Klammern gesetzt ist, wobei diese Wiederholungszahl von 3 bis 1000 gehen kann.

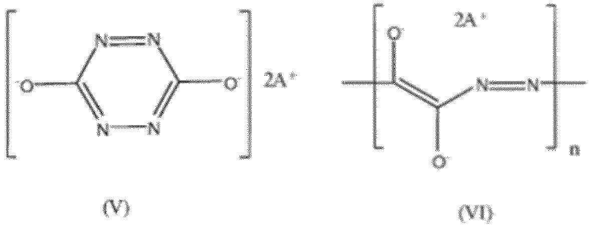

5. Verfahren nach einem der vorhergehenden Ansprüche, bei dem das Lithiumsalz das Lithium-Cetocarboxylat der Formel (II) ist, das auch als Lithiumoxalat bezeichnet wird.

6. Verfahren nach einem der vorhergehenden Ansprüche, bei dem die positive Elektrode als aktives Material ein Material vom Typ lithiumhaltiges Oxid oder vom Typ lithiumhaltiges Phosphat umfasst, umfassend wenigstens ein metallisches Übergangselement.

7. Verfahren nach einem der vorhergehenden Ansprüche, bei dem die positive Elektrode als aktives Material LiFePO₄ umfasst.

8. Verfahren nach einem der Ansprüche 1 bis 7, bei dem die negative Elektrode als aktives Material Folgendes umfasst:
- ein kohlenstoffhaltiges Material wie zum Beispiel harten Kohlenstoff (bekannt unter der angelsächsischen Bezeichnung "hard carbon"), Graphit;
- metallisches Lithium oder eine Lithiumlegierung wie zum Beispiel eine Silizium-Lithium-Legierung, eine Zinn-Lithium-Legierung; oder
- ein Lithium-Mischoxid wie zum Beispiel Li₄Ti₅O₁₂ oder LiTiO₂.

9. Verfahren nach einem der vorhergehenden Ansprüche, bei dem die negative Elektrode als aktives Material Graphit umfasst.

## Claims

1. Method for preparing a lithium-ion accumulator comprising a positive electrode and a negative electrode arranged on either side of an electrolyte, said positive electrode comprising, as an active material, a lithium based material, said method comprising the following steps:
a) a step of deposition on the surface of the positive electrode, before placing in the accumulator, of a lithium salt;
b) a step of assembling the positive electrode, the negative electrode and the electrolyte; and
c) a step of forming a passivation layer on the surface of the negative electrode with the lithium ions coming from the decomposition of the lithium salt by application of a first charge to the abovementioned assembly.

2. Method according to claim 1, wherein the step of deposition is carried out via an ink-jet technique, consisting in depositing on the positive electrode, a composition comprising the lithium salt.

3. Method according to claim 1 or 2, wherein the lithium salt is deposited via a composition comprising:
- the lithium salt;
- an electrically-conductive carbon additive;
- a polymeric binder; and
- an organic solvent.

4. Method as claimed in any preceding claim, wherein the lithium salt is chosen from:
- the lithium azides of formula N₃A, with A corresponding to a lithium cation;
- lithium ketocarboxylates, such as those having the following formulas (II) to (IV): 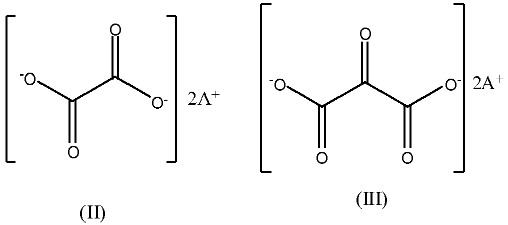 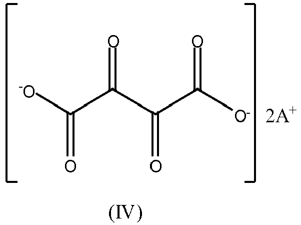 with A corresponding to a lithium cation;
- lithium hydrazides, such as those having the following formulas (V) to (VI): 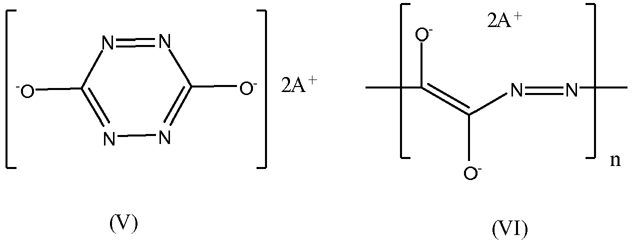 with A corresponding to a lithium cation and n corresponding to the repetition number of the pattern taken between brackets, with this repetition number able to range from 3 to 1000.

5. Method as claimed in any preceding claim, wherein the lithium salt is the lithium ketocarboxylate of formula (II), also called lithium oxalate.

6. Method as claimed in any preceding claim, wherein the positive electrode comprises, as an active material, a material of the lithiated oxide type or of the lithiated phosphate type comprising at least one transition metal element.

7. Method as claimed in any preceding claim, wherein the positive electrode comprises, as an active material, LiFePO₄.

8. Method according to any of claims 1 to 7, wherein the negative electrode comprises, as an active material:
- a carbon material, such as hard carbon, graphite;
- lithium metal or a lithium alloy, such as a silicon-lithium alloy, a tin-lithium alloy); or
- a mixed lithium oxide, such as Li₄Ti₅O₁₂ or LiTiO₂.

9. Method as claimed in any preceding claim, wherein the negative electrode comprises, as an active material, graphite.
